# EUROPÄISCHE PATENTANMELDUNG

(11) **EP 3 741 199 A1**
(43) Veröffentlichungstag der Anmeldung: **25.11.2020**
(21) Anmeldenummer: 20174425.7
(22) Anmeldetag: 13.05.2020
(51) Int. Cl.: A01D 34/82, A01D 75/20

(54) **LANDWIRTSCHAFTLICHES ANBAUGERÄT**

(30) Priorität: 17.05.2019 DE 202019102803 U
(71) Anmelder: PÖTTINGER Landtechnik GmbH, 4710 Grieskirchen (AT)
(72) Erfinder: BAUMGARTNER, Martin, 4710 Grieskirchen (AT)
(74) Vertreter: Thoma, Michael

(57) **Zusammenfassung**

Die vorliegende Erfindung betrifft ein landwirtschaftliches Anbaugerät insbesondere in Form einer Mähmaschine, mit einer Anbauvorrichtung zum Anbauen an einen Schlepper, zumindest einem Arbeitsaggregat sowie einer Schutzvorrichtung, die eine das zumindest eine Arbeitsaggregat aufrecht umgebende Prallfläche, insbesondere Schutztuch, umfasst. Erfindungsgemäß ist die Schutzvorrichtung relativ zum Arbeitsaggregat in liegender Richtung verschiebbar gelagert.

## Beschreibung

Die vorliegende Erfindung betrifft ein landwirtschaftliches Anbaugerät insbesondere in Form einer Mähmaschine, mit einer Anbauvorrichtung zum Anbauen an einen Schlepper, zumindest einem Arbeitsaggregat sowie einer Schutzvorrichtung, die eine das zumindest eine Arbeitsaggregat aufrecht umgebende Prallfläche, insbesondere Schutztuch, umfasst.

Bei landwirtschaftlichen Arbeitsgeräten werden die oft rotierend betriebenen Arbeitsaggregate mit einer Schutz- und/oder Abdeckvorrichtung abgedeckt, um einerseits von den Arbeitsaggregaten weggeschleuderte Steine, Brocken oder andere Objekte an einem weiteren Davonfliegen zu hintern und andererseits Tiere oder gar Personen vor Verletzungen zu schützen. Insbesondere bei Mähwerken geht von den rotierenden Schneidtrommeln Gefahr aus, da einerseits auf die Messer treffende Steine davongeschleudert werden und andererseits durch die umfangsseitig vorstehenden, scharfen Messer hohe Verletzungsgefahr besteht.

Um das Wegschleudern von Steinen und dergleichen unterbinden zu können, umfassen solche Schutzvorrichtungen häufig größere Prallflächen in Form eines Pralltuchs oder eines sehr engmaschigen Prallschutzgitters bzw. -netz, welches davonfliegende Steine und Teilchen einfangen kann. Die Prallfläche erstreckt sich dabei üblicherweise aufrecht vom Boden bis etwa zu einem oberen Ende der Arbeitsaggregate bzw. deren Aufhängung an einem Maschinenrahmen, wobei sich die Prallfläche insbesondere zumindest entlang einer Frontseite erstrecken und gemeinsam alle nebeneinander angeordneten Arbeitsaggregate abdecken kann. Oft erstreckt sich die Prallfläche auch an den Seiten rechts und links der äußersten Arbeitsaggregate ebenfalls in einer aufrechten Ebene, wobei unabhängig hiervon die Prallfläche auch einen liegenden Abschnitt oberhalb der Arbeitsaggregate aufweisen kann. Beispielsweise zeigt die Schrift DE 20 2017 006 567 U1 eine Mähmaschine mit einem Schutztuch, das sich aufrecht vor den rotierenden Mähtrommeln sowie rechts und links seitlich hiervon erstreckt. Um Ein- oder Ausbauchungen des Schutztuchs zu vermeiden, wird das Schutztuch über federgespannte Zugbügel straff gespannt. Eine ähnliche Schutztuchanordnung um die Mähtrommel eines Mähwerks herum zeigt die Schrift EP 25 29 612 A1.

Einerseits soll sich die Prallfläche in Form des genannten Schutztuchs relativ nahe bei den Arbeitsaggregaten erstrecken, um unnötige Baugröße zu vermeiden, aber auch um wegfliegende Steine bzw. Teilchen rasch einzufangen und diesen keinen größeren Streubereich zu geben. Andererseits ist es jedoch schwierig, die Werkzeuge der Arbeitsaggregate auszutauschen bzw. die Arbeitsaggregate in anderer Weise zu warten, wenn die Schutzvorrichtung mit ihrer Prallfläche den Zugang zu den Arbeitsaggregaten verhindert oder zumindest beeinträchtigt. Beispielsweise sind die Schneidwerkzeuge von Mähwerken regelmäßig nachzuschleifen bzw. auszutauschen, da sie ständigem Verschleiß unterliegen. Dies ist jedoch nicht ganz einfach, wenn die recht nahe am Schutztuch liegenden Schneidmesser schwer zugänglich sind.

Es wurde insofern bereits angedacht, die Schutzvorrichtung wegschwenkbar zu lagern, sodass das Pralltuch nach oben weggeschwenkt werden kann, wenn zum Zwecke der Wartung oder Reparatur die Arbeitsaggregate zugänglich gemacht werden sollen. Dabei ist es oft jedoch nicht möglich, das Pralltuch weit genug nach oben wegzuschwenken, da die Anbauvorrichtung über den Arbeitsaggregaten oft Aufhängungselemente wie Lenker, Entlastungsfedern oder Wippeinrichtungen umfasst, um Pendel-, Tauch- oder Nickbewegungen der Arbeitsaggregate zum Zwecke der Bodenanpassung zu ermöglichen. Beispielsweise zeigt die Schrift EP 15 93 294 B1 eine solche Anbauvorrichtung mit einem flexiblen Aufhängungsmechanismus für ein Mähwerk, dessen gelenkig miteinander verbundene Aufhängungslenker sich gegenläufig erstrecken und den Raum oberhalb des Mähwerks bis über dessen Vorderseite hinaus einnehmen, sodass ein frontseitig angebrachtes Prall- bzw. Schutztuch nur begrenzt nach oben schwenkbar ist und recht schnell mit der Lenkeraufhängung kollidiert.

Der vorliegenden Erfindung liegt die Aufgabe zugrunde, ein verbessertes landwirtschaftliches Anbaugerät der genannten Art zu schaffen, das Nachteile des Standes der Technik vermeidet und letzteren in vorteilhafter Weise weiterbildet. Insbesondere soll die Schutzvorrichtung durch eine ausreichend große, in der Betriebsstellung nahe bei den Arbeitsaggregaten positionierte Prallfläche für hohe Sicherheit sorgen, andererseits jedoch den Zugang zu den Arbeitsaggregaten zum Zwecke der Wartung und Reparatur ermöglichen.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, die Schutzvorrichtung in näherungsweise horizontaler Richtung von den Arbeitsaggregaten wegfahrbar auszubilden, um die Prallfläche für Wartungszwecke von den Arbeitsaggregaten wegfahren zu können, auch wenn der Raum oberhalb der Arbeitsaggregate durch einen Aufhängungsmechanismus oder andere Gerätebauteile versperrt ist. Erfindungsgemäß ist die Schutzvorrichtung relativ zum Arbeitsaggregat in liegender Richtung verschiebbar gelagert. Die aufrechte Prallfläche kann beim Verschieben ihre aufrechte Ausrichtung im Wesentlichen behalten und in einer Richtung näherungsweise senkrecht zur Prallfläche von den Arbeitsaggregaten weggeschoben werden, um einen besseren Zugang zu den Arbeitsaggregaten zu ermöglichen.

Die Schutzvorrichtung kann dabei mittels einer Schiebeführung näherungsweise horizontal verschiebbar geführt sein, wobei die genannte Schiebeführung zumindest zwei aneinander verschieblich geführte Führungsschienen oder -elemente aufweisen kann.

Alternativ zu einer solchen Schiebeführung kann die Schutzvorrichtung auch mittels einer Lenkerführung beispielsweise in Form einer Parallelogrammlenkerführung oder einer Scherenschlagführung in der genannten Weise horizontal oder zumindest näherungsweise horizontal verschieblich geführt sein, wobei eine solche Lenkerführung beispielsweise um aufrechte Achsen gelenkig gelagerte Scherenschlag- oder Parallelogrammlenker aufweisen könnte. Um eine stabile und dennoch kompakte Schiebelagerung zu erzielen, kann jedoch eine Schiebeführung mit aneinander längsverschieblich geführten Führungselementen vorgesehen sein.

Die genannte Verschieblichkeit in liegender Richtung kann eine rein translatorische Verschiebung entlang einer Geraden sein. Alternativ kann jedoch auch eine leicht gekrümmte, beispielsweise von den Arbeitsaggregaten weg ansteigende Führungsbahn vorgesehen sein, wobei auch hier das Pralltuch bzw. die Prallfläche der Schutzvorrichtung in ihrer aufrechten Ausrichtung verbleiben kann und/oder entlang der gekrümmten Schiebebahn keine Kippbewegung ausführen muss.

Gleichwohl ist es jedoch ebenfalls möglich, dass die Prallfläche der Schutzvorrichtung beim Verschieben entlang der Schiebeführungsbahn auch eine rotatorische Komponente ausführt, beispielsweise beim Wegfahren von den Arbeitsaggregaten gleichzeitig auch leicht - oder auch stärker - nach oben oder seitlich weggekippt wird, um die Beabstandung von den Arbeitsaggregaten zum Zwecke der Wartung durch die Kippbewegungskomponente weiter zu vergrößern.

In vorteilhafter Weiterbildung der Erfindung kann zum Verschieben der Schutzvorrichtung eine Betätigungsvorrichtung vorgesehen sein, die eine Bewegungs- und/oder Kraftübersetzung und/oder -untersetzung vorsehen kann, um die Schutzvorrichtung leichter verschieben zu können. Dabei kann die genannte Betätigungsvorrichtung dazu ausgebildet sein, eine rotatorische Stellbewegung in eine translatorische Schiebebewegung umzusetzen und/oder eine kleine Stellbewegung in eine große Stellbewegung oder eine große Stellbewegung in eine kleine Stellbewegung umzusetzen. Alternativ oder zusätzlich kann die Betätigungsvorrichtung dazu ausgebildet sein, eine kleine Betätigungskraft in eine große Betätigungskraft oder umgekehrt zu wandeln.

Insbesondere kann eine solche Betätigungsvorrichtung einen Gelenkhebelmechanismus umfassen, der eine drehbar gelagerte Betätigungswelle und zumindest einen Schwenkhebel aufweist, der durch Drehen der genannten Betätigungswelle verschwenkt wird und gelenkig mit der verschieblich gelagerten Prallfläche bzw. der verschieblich gelagerten Schutzvorrichtung gekoppelt ist, sodass eine Schwenkbewegung des genannten Schwenkhebels zu einer Schiebebewegung des Pralltuchs führt.

Eine solche Betätigungswelle kann in einfacher Weise händisch über eine ansetzbare Kurbel oder ein aufsetzbares Drehwerkzeug oder in anderer Weise beispielsweise durch ein Betätigungsrad betätigt werden. Alternativ oder zusätzlich kann aber auch in einfacher Weise ein Betätigungsmotor zum Drehen der genannten Betätigungswelle eingesetzt werden, wobei ein solcher Betätigungsmotor beispielsweise einen Elektromotor und/oder einen Druckmittelaktor beispielsweise in Form eines Hydromotors oder eines Hydraulikzylinders aufweisen kann, wobei im Falle eines Hydraulikzylinders ein Schwenkhebel an der Betätigungswelle angebracht sein kann, der vom Hydraulikzylinder verstellt werden kann.

Der durch die Betätigungswelle verschwenkbare Schwenkhebel kann direkt drehfest an der Betätigungswelle befestigt sein. Alternativ kann der Schwenkhebel aber auch schwenkbar gelagert und getrieblich an die Betätigungswelle angebunden sein, beispielsweise über eine Stirnradstufe, eine Riemen- oder Kettenstufe oder einen zwischengeschalteten Kipp- oder Schwenkhebel.

Um eine gleichmäßige, stabile Schiebebewegung ohne Verkanten erzeugen zu können, können zumindest zwei voneinander beabstandete Schwenkhebel vorgesehen sein, die synchron betätigbar an die genannte Betätigungswelle angekoppelt sein können, sodass ein Verdrehen der Betätigungswelle die beiden Schwenkhebel gleichmäßig verschwenkt. Die genannten Schwenkhebel können dabei andererseits gelenkig mit der Schutzvorrichtung bzw. der Prallfläche gekoppelt sein, um eine Schwenkbewegung der Schwenkhebel in eine gleichmäßige Schiebebewegung der Prallfläche umzusetzen.

In Weiterbildung der Erfindung können die beiden Schwenkhebel zumindest näherungsweise so weit voneinander beabstandet sein, wie sich die Prallfläche entlang des oder der Arbeitsaggregate erstreckt. Erstreckt sich die Prallfläche über die gesamte Arbeitsbreite und/oder entlang sämtlicher Arbeitsaggregate, können die beiden Schwenkhebel an seitlichen Endabschnitten des Anbaugeräts rechts und links angeordnet sein. Die Betätigungswelle des Betätigungsmechanismus kann in Weiterbildung der Erfindung eine Länge aufweisen, die zumindest der Beabstandung der beiden Schwenkhebel entspricht.

Die Schwenkhebel können jeweils in einer Schwenkebene verschwenken, die aufrecht und/oder senkrecht zur Prallfläche angeordnet sein kann. Alternativ oder zusätzlich kann sich die betätigungswelle liegend und/oder näherungsweise parallel zu der Prallfläche erstrecken.

Um bei eingeschobener, das heißt an die Arbeitsaggregate herangeschobener Prallfläche keine überstehenden Schiebeführungselemente zu haben, kann die Schiebeführung in vorteilhafter Weiterbildung der Erfindung nach Art einer Ausziehschienenführung ausgebildet sein, wie sie beispielsweise bei Backöfen bekannt ist. Insbesondere kann die Schiebeführung zumindest zwei Führungsschienen umfassen, die entlang ihrer Längsrichtungen aneinander verschiebbar geführt sind, beispielsweise durch Gleit- und/oder Wälzlagerelemente. Dabei kann eine der Führungsschienen ortsfest an einem Maschinenrahmenteil befestigt sein, während die andere Führungsschiene längs der feststehenden Führungsschiene ausgefahren werden kann. Die ausfahrbare Führungsschiene kann mit der Prallfläche oder einem die Prallfläche tragenden Träger verbunden sein. Grundsätzlich wäre es dabei auch möglich, mehr als zwei Führungsschienen aneinander längsverschiebbar zu führen, wobei eine feststehende Führungsschiene eine Zwischenschiene längsverfahrbar führen kann, die wiederum eine Ausziehschiene längsverschiebbar führt.

In vorteilhafter Weiterbildung der Erfindung kann die Prallvorrichtung durch zwei voneinander beabstandete, liegend ausgerichtete Führungsschienenpaare verschieblich geführt sein, wobei die genannten Führungsschienengruppen an seitlichen Randbereichen oder Endabschnitten der Prallfläche angeordnet sein können, beispielsweise seitlich rechts und links an Randabschnitten des Anbaugeräts.

In vorteilhafter Weiterbildung der Erfindung kann die Prallfläche an einem liegend ausgerichteten Träger befestigt sein, der in der genannten Weise an der Schiebeführung gelagert ist, insbesondere mit seinen Endabschnitten an den genannten Führungsschienen. Insbesondere kann der genannte Träger näherungsweise U-förmig ausgebildet sein und zwei voneinander beabstandete Schenkel aufweisen, die durch einen dazu quer verlaufenden Mittelschenkel verbunden sind, an dem die Prallfläche befestigt werden kann. Die seitlich beabstandeten, beispielsweise parallelen Schenkel können in der genannten Weise als Ausziehführungsschienen ausgebildet sein und/oder daran befestigt sein.

Die genannte Prallfläche kann insbesondere in Form eines Prall- oder Schutztuchs ausgebildet sein, welches biegeschlaff oder elastisch ausgebildet sein kann. Alternativ kann die Prallfläche aber auch von einem engmaschigen Gitter oder einem engmaschigen Netz, aber auch von einem formstabilen Panel beispielsweise in Form eines dünnen Metallblechs oder einer Kunststoffplatte ausgebildet sein, wobei auch Mischformen möglich sind.

Insbesondere kann sich die genannte Prallfläche an der Frontseite des zumindest einen Mähwerks und/oder in bestimmungsgemäßer Fahrtrichtung des Anbaugeräts vor dem Arbeitsaggregat erstrecken, wobei die genannte Prallfläche zumindest näherungsweise vertikal ausgerichtet sein oder einen aufrechten Abschnitt aufweisen kann, der sich vom Boden bis zu einem oberen Endabschnitt des Arbeitsaggregats und/oder einem oberhalb des Arbeitsaggregats angeordneten Maschinenrahmen oder allgemein ausreichend weit über die Arbeitswerkzeuge hinaus erstrecken kann, um einen ausreichenden Schutz zu gewähren.

Die genannte Prallfläche kann sich alternativ oder zusätzlich aber auch an rechten und linken Seitenflächen des zumindest einen Arbeitsaggregats erstrecken, wobei auch eine aufrechte, näherungsweise U-förmige Prallfläche vorgesehen sein kann, die gleichermaßen die Frontseite sowie die rechten und linken Seitenflächen umgeben kann. Grundsätzlich wäre es aber auch möglich, ein heckseitiges Pralltuch bzw. eine heckseitig vorgesehene Schutzvorrichtung in der genannten Weise verschieblich zu führen, wobei auch eine solche Heckschutzvorrichtung rechte und linke Seitenabschnitte mit umgeben kann.

Ist die Prallfläche in der genannten Weise frontseitig vor den Arbeitsaggregaten angeordnet, kann die Verschieberichtung näherungsweise fahrtrichtungsparallel ausgerichtet sein, um die Prallfläche nach vorne von den Arbeitsaggregaten wegschieben zu können.

Das landwirtschaftliche Arbeitsaggregat kann frontseitig an einen Schlepper, aber auch heckseitig an den Schlepper anbaubar sein. Insbesondere kann das Anbaugerät auch eine Aufhängungsvorrichtung umfassen, die die Arbeitsaggregate ein- oder mehrachsig beweglich am Anbaubock aufhängt, um eine Anpassung an die Bodenkontur zu ermöglichen, wobei sich die genannte Aufhängungsvorrichtung auch oberhalb und/oder in Fahrtrichtung vor den Arbeitsaggregaten erstrecken kann, ohne dass dies die Verschiebung der Schutzvorrichtung behindern würde.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Frontansicht eines landwirtschaftlichen Anbaugeräts in Form eines Mähwerks, dessen Mähtrommeln durch eine Schutzvorrichtung abgedeckt sind, und
- Fig. 2:: eine ausschnittsweise, perspektivische Darstellung der Mähmaschine aus Fig. 1, die die verschiebliche Lagerung und den Betätigungsmechanismus zum Verschieben eines Schutztuchträgers zeigt, an dem ein Schutztuch der Schutzvorrichtung befestigbar ist.

Wie die Figuren zeigen, kann das landwirtschaftliche Anbaugerät 1 als Mähmaschine ausgebildet sein und eine Anbauvorrichtung 2 aufweisen, mittels derer das Anbaugerät 1 an einen nicht dargestellten Schlepper angebaut werden kann, beispielsweise über Ober- und Unterlenker einen Anbaubock 3 tragen kann.

An dem genannten Anbaubock 3 können mittels einer Aufhängungsvorrichtung 4 mehrere Arbeitsaggregate 5 aufgehängt sein, die um aufrechte Achsen rotatorisch antreibbare Arbeitstrommeln aufweisen können. Im Falle einer Mähmaschine können die Arbeitsaggregate 5 um aufrechte Achsen rotatorisch antreibbare Schneidtrommeln oder -teller umfassen, an deren Außenumfang Schneidwerkzeuge wie Klingen angebracht sein können.

Dabei können mehrere Arbeitsaggregate 5 nebeneinander angeordnet und an einem Maschinenrahmen 6 befestigt bzw. montiert oder angelenkt sein, welcher Maschinenrahmen 6 in der genannten Weise durch die Aufhängungsvorrichtung 4 am Anbaubock 3 gelagert ist.

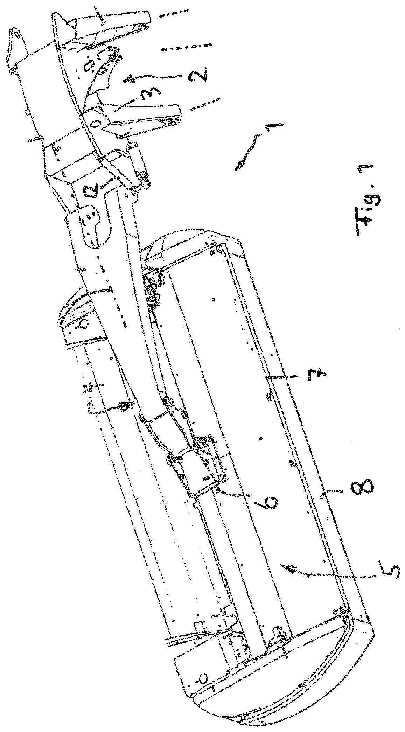

In Figur 1 ist ein seitlich auskragendes Mähwerk gezeigt. Insbesondere kann das Anbaugerät 1 aber auch ein frontseitig an einen Schlepper anbaubares Mähwerk umfassen.

Die genannten Arbeitsaggregate 5 werden von einer Schutzvorrichtung 7 abgedeckt, die eine aufrechte Prallfläche 8 in Form eines Prall- bzw. Schutztuchs umfassen kann. Die genannte Prallfläche 8 erstreckt sich dabei aufrecht an der Frontseite, das heißt in Fahrtrichtung vor den genannten Arbeitsaggregaten 5, wobei sich die Prallfläche 8 auch seitlich rechts und links um die Arbeitsaggregate 5 herum erstrecken kann. Die genannte Schutzvorrichtung 7 kann die Arbeitsaggregate 5 auch an der Oberseite abdecken, wie dies Figur 1 zeigt.

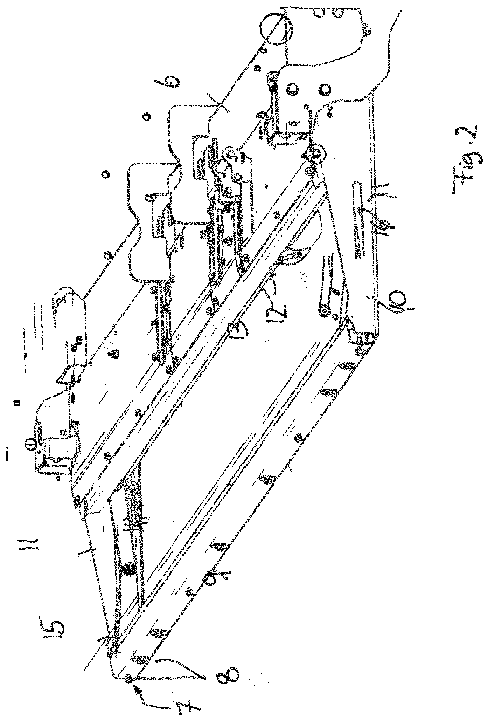

Die genannte Prallfläche 8 in Form eines Pralltuchs oder einer ähnlichen flächigen Komponente kann, wie Figur 2 zeigt, an einem Schutzvorrichtungsträger 9 befestigt sein, der sich in liegender Ausrichtung an einer Seite entlang der Arbeitsaggregate 5 erstrecken kann, insbesondere entlang der Frontseite. Der genannte Schutzvorrichtungsträger 9 kann dabei im Bereich eines oberen Endabschnitts der Arbeitsaggregate 5 und/oder etwa auf Höhe des Maschinenrahmens 6 angeordnet sein und sich liegend quer vor den Arbeitsaggregaten 5 erstrecken. Die genannte Prallfläche 8 kann sich von dem Schutzvorrichtungsträger 9 aufrecht nach unten bis zum Boden erstrecken, um die Arbeitsaggregate 5 zu schützen bzw. abzudecken.

Wie Figur 2 zeigt, ist der genannte Schutzvorrichtungsträger 9 in liegender Richtung etwa fahrtrichtungsparallel verschieblich gelagert, um von den Arbeitsaggregaten 5 nach vorne wegbewegt bzw. nach hinten auf die Arbeitsaggregate 5 zubewegt werden zu können.

Der Schutzvorrichtungsträger 9 kann dabei durch eine Schiebeführung 10 gelagert sein, die an dem Maschinenrahmen 6 befestigt bzw. montiert sein kann. Die genannte Schiebeführung 10 kann dabei zwei voneinander beabstandete, liegend vom Maschinenrahmen 6 vorspringende Führungsschienen 11 aufweisen, an denen der Schutzvorrichtungsträger 9 nach Art eines Schlittens verschieblich gelagert sein kann. Der genannte Schutzvorrichtungsträger 9 kann dabei an seinen Enden zwei Schiebeführungsschenkel aufweisen, die Schlittenteile oder Führungsschienen bilden können, die an den genannten Führungsschienen 11 längsverschieblich geführt sind. Beispielsweise kann der genannte Schutzvorrichtungsträger 9 insgesamt U-förmig ausgebildet sein und zwei seitliche, voneinander beabstandete, etwa parallele Schenkel umfassen, die durch einen Mittelschenkel verbunden sind, an dem die Prallfläche 8 befestigt werden kann.

Alternativ wäre es aber auch möglich, den Schutzvorrichtungsträger 9 balkenförmig auszubilden und mit seinen Endabschnitten in den Schiebeführungsschienen 11 verschieblich zu lagern.

Zum Verschieben des genannten Schutzvorrichtungsträgers 9 ist eine Betätigungsvorrichtung 12 vorgesehen, die einerseits eine drehbar gelagerte Betätigungswelle 13 umfasst und ferner zwei Schwenkhebel 14 umfassen kann, die getrieblich mit der genannten Betätigungswelle 13 gekoppelt, beispielsweise drehfest verbunden sein können, um eine Drehbewegung der Betätigungswelle 13 in eine Schwenkbewegung der Schwenkhebel 14 umzusetzen. Die genannten Schwenkhebel 14 sind dabei gelenkig mit dem Schutzvorrichtungsträger 9 gekoppelt, sodass eine Schwenkbewegung der Schwenkhebel 14 in eine Schiebebewegung des Schutzvorrichtungsträger 9 umgesetzt wird.

Anstelle der genannten Schwenkhebel 14 könnte die Betätigungsvorrichtung 12 aber auch andere Getriebemittel umfassen, beispielsweise eine mit dem Schutzvorrichtungsträger 9 verbundene Zahnstange oder Schubstange, die von einem mit der Betätigungswelle 13 gekoppelten Ritzel bzw. Antriebsrad längsverschoben werden kann.

Wie Figur 2 zeigt, ist die Prallfläche 8 durch den Schutzvorrichtungsträger 9 näherungsweise horizontal in einer Richtung senkrecht zur Prallfläche verfahrbar, um von den Arbeitsaggregaten 5 wegbewegt bzw. umgekehrt an diese herangefahren werden zu können.

## Patentansprüche

1. Landwirtschaftliches Anbaugerät, insbesondere Mähmaschine, mit einer Anbauvorrichtung (2) zum Anbauen an einen Schlepper, zumindest einem Arbeitsaggregat (5) sowie einer Schutzvorrichtung (7), die eine das Arbeitsaggregat (5) aufrecht umgebende Prallfläche (8), insbesondere in Form eines Schutztuchs, aufweist, **dadurch gekennzeichnet, dass** die Schutzvorrichtung (7) relativ zum Arbeitsaggregat (5) in liegender Richtung verschiebbar gelagert ist.

2. Landwirtschaftliches Anbaugerät nach dem vorhergehenden Anspruch, wobei die Prallfläche (8) frontseitig und/oder in Fahrtrichtung vor dem zumindest einen Arbeitsaggregat (5) aufrecht stehend angeordnet und in einer aufrechten Stellung verbleibend verfahrbar ist.

3. Landwirtschaftliches Anbaugerät nach einem der vorhergehenden Ansprüche, wobei die Schutzvorrichtung (9) durch eine Schiebeführung (10), die zumindest eine Führungsschiene (11) umfasst, verschieblich gelagert ist.

4. Landwirtschaftliches Anbaugerät nach dem vorhergehenden Anspruch, wobei die Schiebeführung (10) zumindest ein Paar Führungsschienen (11, 15) umfasst, die aneinander verschiebbar gelagert sind derart, dass eine die Prallfläche tragende Führungsschiene (15) über die andere, stehend angeordnete Führungsschiene hinausschiebbar ist.

5. Landwirtschaftliches Anbaugerät nach einem der beiden vorhergehenden Ansprüche, wobei die Schiebeführung (10) zwei voneinander beabstandete, näherungsweise parallel liegend angeordnete Führungsschienen (11) aufweist, an denen ein die Prallfläche (8) tragender Schutzvorrichtungsträger (9) verschiebbar gelagert ist.

6. Landwirtschaftliches Anbaugerät nach dem vorhergehenden Anspruch, wobei die Führungsschienen (11) eine Schiebeführungsnut (16) aufweisen, in der der Schutzvorrichtungsträger (9) verschieblich geführt ist, wobei die genannte Schiebeführungsnut (16) einen gegenüber der Horizontalen ansteigenden Abschnitt und/oder zwei zueinander stumpfwinklig angeordnete Abschnitte aufweist.

7. Landwirtschaftliches Anbaugerät nach einem der vorhergehenden Ansprüche, wobei die Prallfläche (8) mit einem oberen Endabschnitt an einem/dem liegenden Schutzvorrichtungsträger (9) aufgehängt ist, der quer zu seiner Längsachse verschieblich an zumindest einem liegend ausgerichteten Schiebeführungselement gelagert ist.

8. Landwirtschaftliches Anbaugerät nach einem der vorhergehenden Ansprüche, wobei eine Betätigungsvorrichtung (12) zum Verschieben der Prallfläche (8) eine drehbar gelagerte Betätigungswelle (13) umfasst, die über einen Getriebemechanismus mit der Prallfläche (8) gekoppelt ist derart, dass eine Drehbewegung der Betätigungswelle (13) in eine Schiebebewegung der Prallfläche (8) umgesetzt wird.

9. Landwirtschaftliches Anbaugerät nach dem vorhergehenden Anspruch, wobei der Getriebemechanismus einen Gelenkhebelmechanismus umfasst, der zumindest einen Schwenkhebel (14) aufweist, der durch Drehen der Betätigungswelle (13) schwenkbar ist und gelenkig mit der verschiebbaren Prallfläche (8) gekoppelt ist derart, dass ein Verschwenken des Schwenkhebels ein Verschieben der Prallfläche (8) erzeugt, wobei der zumindest eine Schwenkhebel in einer Schwenkebene verschwenkbar ist, die vorzugsweise senkrecht zur Prallfläche (8) und/oder aufrecht ausgerichtet ist.

10. Landwirtschaftliches Anbaugerät nach einem der vorhergehenden Ansprüche, wobei an die Betätigungswelle (13) zwei voneinander beabstandete, synchron betätigbare Schwenkhebel (14) angekoppelt sind, die jeweils gelenkig an die Prallfläche (8) angebunden sind.

11. Landwirtschaftliches Anbaugerät nach einem der vorhergehenden Ansprüche, wobei die Betätigungswelle (13) sich liegend über den Arbeitsaggregaten (5) erstreckt.

12. Landwirtschaftliches Anbaugerät nach einem der vorhergehenden Ansprüche, wobei das Anbaugerät als Mähmaschine ausgebildet ist und das zumindest eine Arbeitsaggregat (5) ein antreibbares Mähwerkzeug, insbesondere in Form eines rotatorisch antreibbaren Schneidtellers und/oder einer rotatorisch antreibbaren Schneidtrommel, aufweist.

13. Landwirtschaftliches Anbaugerät nach einem der vorhergehenden Ansprüche, wobei mehrere Arbeitsaggregate (5) nebeneinander angeordnet sind, wobei sich die Prallfläche (8) entlang einer Seite der mehreren Arbeitsaggregate (5) erstreckt und die genannten mehreren Arbeitsaggregate (5) abdeckt.

14. Landwirtschaftliches Anbaugerät nach einem der vorhergehenden Ansprüche, wobei die Arbeitsaggregate (5) durch eine Aufhängungsvorrichtung (4) an der Anbauvorrichtung (2) aufgehängt sind, welche Aufhängungsvorrichtung (4) sich oberhalb der Arbeitsaggregate (5) erstreckt, wobei die Aufhängungsvorrichtung (4) mehrere gelenkig miteinander verbundene Aufhängungslenker aufweist.

15. Landwirtschaftliches Anbaugerät nach einem der vorhergehenden Ansprüche, wobei das Anbaugerät ein Frontmähwerk und/oder ein Heckmähwerk aufweist, an dem die genannte Schutzvorrichtung (7) angebracht ist.
